# EUROPEAN PATENT APPLICATION

(11) **EP 4 400 973 A1**
(43) Date of publication of application: **17.07.2024**
(21) Application number: 24151336.5
(22) Date of filing: 11.01.2024
(51) Int. Cl.: G06F 11/30, G06F 11/34

(54) **A PLATFORM INDEPENDENT ENERGY CONSUMPTION ESTIMATION METHOD OF A COMPUTER PROGRAM**

(30) Priority: 11.01.2023 US 202363438261 P
(71) Applicant: Deutsche Telekom AG, 53113 Bonn (DE)
(72) Inventor: MIMRAN, David, 6215505 Tel Aviv (IL); BRODT, Oleg, 8471621 Beer Sheva (IL); ELOVICI, Yuval, 7986400 Arugot (IL); SHABTAI, Asaf, 7684200 Hulda (IL); CHOI, Jinsung, 53175 Bonn (DE); LEHMANN, Heiko, 12587 Berlin (DE)
(74) Representative: Schmidt, Christian

(57) **Abstract**

A system for computing an estimated energy consumption of a target program running on a specific computerized system, comprising a processor and associated memory, storing an application being run by the at least one processor, which are adapted to measure the energy consumption of every atomic action of the specific computerized system in different resolutions; create an energy cost for mapping between all atomic actions and their corresponding energy requirements for a specific computer system, on which the program will run; create a profile for the target program, in terms of which atomic actions of the specific computerized system are required for the execution of the target program on the specific computerized system; calculate the energy consumption of the target program, by calculating the amount of atomic actions related to the target program during its execution, multiplied by the energy consumption associated with every respective atomic action.

## Description

### Field of Invention

The present invention relates to the field of energy consumption estimation. More particularly, the present invention relates to a platform independent energy consumption estimation method of a computer program, regardless of the platform where such program is running.

### Background of the Invention

Developing green software is becoming more and more important. Achieving climate neutrality is being set by many leaders and each tech sector has an important role. In the near future, every technological company will have to embrace the green digital transition, while ensuring energy-efficient software development.

There are various ways to ensure green software. Tracking the energy consumption of each developed software is one of the ways. However, different platforms require different strategies. For example, some tools only work with Intel CPUs, other only work with a particular OS, and so on. Therefore, whenever measuring the energy consumption is required, different tools should be considered before finding the right power tool that is compatible with a particular software system.

The most accurate strategy to measure energy consumption is using power monitoring hardware tools that connect to the power source of a computerized device or component and measure the actual power leveraged at any instant of time. However, power monitors are difficult to set up, since they require making custom changes to the computerized device.

Another approach is using energy profilers which do not require any special hardware or power sensors. Instead they typically have an estimation model of the power cost of the different hardware components. Based on which components are active during execution, the profiler estimates a particular energy cost.

Energy profilers are usually easy-to-use tools that you can simply run from any device to obtain the total energy consumption. Since energy profilers rely on estimations, they can only operate under very specific environments.

It is, therefore, an object of the present invention to provide a platform independent energy consumption estimation method of a computer program, regardless of the platform where such program is running.

Other objects and advantages of the invention will become apparent as the description proceeds.

### Summary of the Invention

A method for computing an estimated energy consumption of a target program running on a specific computerized system, comprising:
a) measuring the energy consumption of every atomic action of the specific computerized system in different resolutions;
b) creating a an energy cost for mapping between all atomic actions and their corresponding energy requirements for a specific computer system, on which the program will run;
c) creating a profile for the target program, in terms of which atomic actions of the specific computerized system are required for the execution of the target program on the specific computerized system; and
d) calculating the energy consumption of the target program, by calculating the amount of atomic actions related to the target program during its execution, multiplied by the energy consumption associated with every respective atomic action.

The energy consumption of every atomic action of the computerized system may be measured by:
a) for each resource category, writing a program that consumes the maximum available resource for a target program in a continuous manner for a predetermined period of X seconds;
b) running the resource consumption programs which are available for each resource category for X times and Y seconds, such that the amount of seconds should be at least 100% longer than the time it takes a program to start up and shut down;
c) during each program execution, recording the amount of energy consumed by the computer system via an external power-meter, or via internal energy metrics;
d) calculating an average energy consumption level for each X executions of each program in each consumption category and a corresponding standard deviation, as long as the standard deviation does not exceed a predetermined threshold of the average consumption level;
e) whenever the standard deviation exceeds the threshold, repeating the executions of the target program until the standard deviation that is below the predetermined threshold;
f) recording the energy consumed for each resource group per second;
g) creating an idle program that does not substantially consume any resources in the resource groups
h) executing the idle program for X times and Y seconds per execution;
i) calculating an average energy consumption level for each X executions of the target program and the standard deviation, as long as the standard deviation does not exceed a certain threshold of the average energy consumption level, and whenever the standard deviation exceeds the threshold, repeating the execution of the program until achieving a standard deviation that is below the threshold; and
j) recording the average energetic consumption of the computer system, resulted in the previous step as the energetic cost of the idle program.

The program may be executed in a loop for the period of X seconds.

A profile for a target computer program to be analyzed may be created by:
a) following the creation of a record of the energetic cost per resource the energetic cost of the idle program, executing the target program for X times, where each time the idle program operates for Y seconds;
b) during the execution of the target program, recording the computer resource consumption across all its main categories;
c) calculating an average resource consumption level for each X executions of the target program and the respective resource categories recorded; and
d) calculating the standard deviation of the results, as long as the standard deviation does not exceed a certain threshold of the average energy consumption level, and whenever the standard deviation exceeds the threshold, repeating the execution of the target program until achieving a standard deviation that is below the threshold.

The energy consumption of the computer program may be calculated by:
a) calculating the energetic cost of the program by multiplying each average resource consumption result with the energetic consumption of the respective resource category;
b) adding all the results into a sum representing the total energetic cost of the target program; and
c) subtracting the result from the preceding step, the energetic cost of the idle program, to thereby obtain the relative energy consumption result of the target program.

The specific computerized system may be selected from the group of:
- Desktops;
- Laptops;
- mobile phones;
- servers;
- tablets;
- loTs;
- embedded systems.

A system for computing an estimated energy consumption of a target program running on a specific computerized system, comprising:
a) at least one processor and associated memory, storing an application being run by the at least one processor, being adapted to:
b) measure the energy consumption of every atomic action of the specific computerized system in different resolutions;
c) create an energy cost for mapping between all atomic actions and their corresponding energy requirements for a specific computer system, on which the program will run;
d) create a profile for the target program, in terms of which atomic actions of the specific computerized system are required for the execution of the target program on the specific computerized system; and
e) calculate the energy consumption of the target program, by calculating the amount of atomic actions related to the target program during its execution, multiplied by the energy consumption associated with every respective atomic action.

### Brief Description of the Drawings

The above and other characteristics and advantages of the invention will be better understood through the following illustrative and non-limitative detailed description of preferred embodiments thereof, with reference to the appended drawings, wherein:

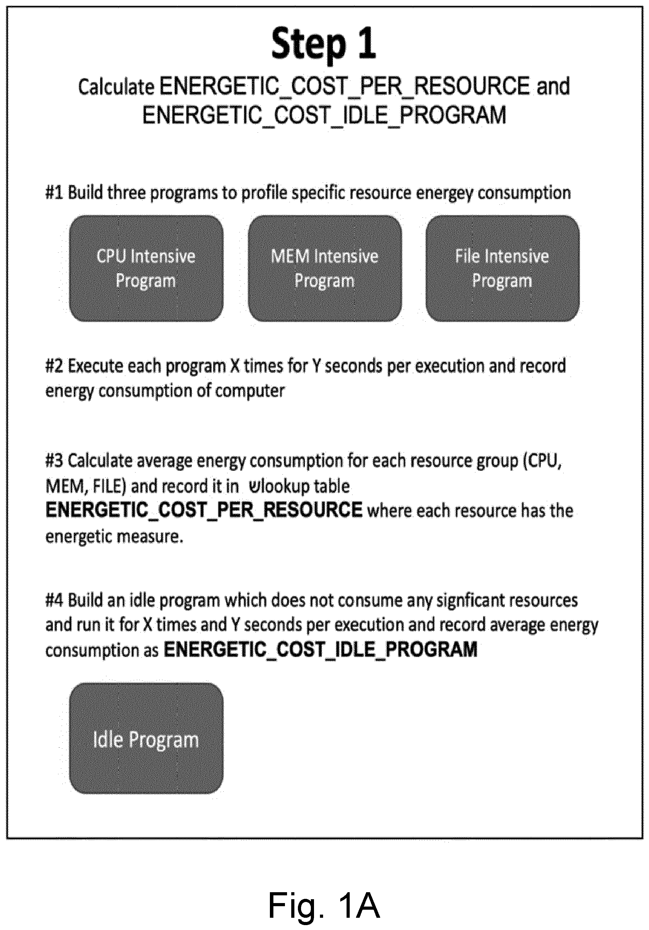

- Fig. 1A is a flowchart of a process for calculating the energy cost per resource of a computerized system that runs the software and the energy cost of an idle program, according to an embodiment of the invention; and

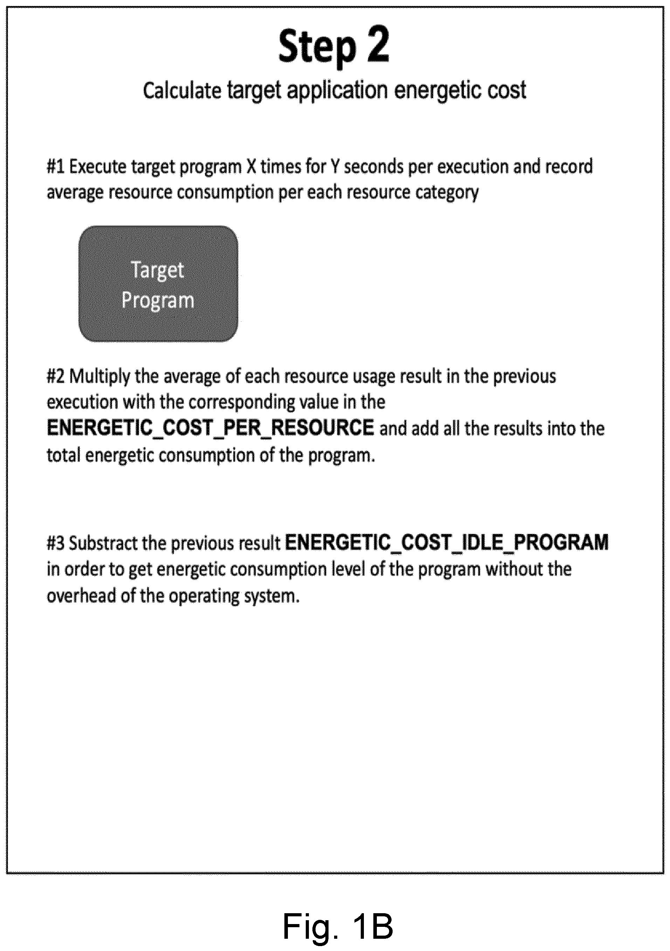

- Fig. 1B is a flowchart of a process for calculating the energy cost of target application (software) that runs on a computerized system, according to an embodiment of the invention.

### Detailed Description of the Invention

The present provides an energy consumption estimation method of a computer program, which is platform independent. The proposed method may be implemented to any computer program, regardless of the platform where the program is running. The present invention describes a system and a method which can estimate the energy consumption of a specific computer program in a platform-independent manner.

The method of the present invention is capable of computing an estimated energy consumption of a computer program running on a specific computer system.

At the first step, the energy consumption of every atomic action of a computer system is measured in different atomic resolutions. For example, the energy consumption of executing a single CPU instruction and the energy consumption of fetching a unit of data from a memory are considered to be high-resolution atomic action. On the other hand, the energy consumption of accessing a file stored on a computer hard drive is considered to comprise several other atomic actions. After sorting each atomic action, an energy tariff is created. The energy tariff is used for mapping between all atomic actions and their corresponding energy requirements for a specific computer system, on which the program should run.

Accordingly, the energetic cost of programs is estimated, such that each program utilizes a specific resource on a computer system where the CPU, associated memory and file operations are considered as the main resource categories that consume variable energy in a computer system. For example, two measures can be within the file operations category: the amount of KB involved in the operation and the amount of KB involved in a sum of operations. The average energetic cost of each resource category group is first calculated, according to the following sub-steps:
At the first sub-step, for each resource category, writing a program that consumes the maximum available resource for a program in a continuous manner for a predetermined period of X seconds, i.e., a program that consumes 100% of CPU and does not consume significantly any other resource from the available resource groups. This program can be executed in a loop for the period of X seconds.

At the second sub-step, running the resource consumption programs which are available for each resource category for X amount of times and Y seconds. The amount of seconds should be at least 100% longer than the time it takes a program to start up and shut down.

At the third sub-step, during each program execution, recording the amount of energy consumed by the computer system via an external Watt-meter, or via the internal energy metrics, which are available on battery powered computers. The change in battery level reflects the amount of energy consumed.

At the fourth sub-step, calculating an average energy consumption level for each X executions of each program in each consumption category and the standard deviation, as long as the standard deviation does not exceed a certain threshold (e.g., a threshold of ±25%) of the average consumption level. In case the standard deviation exceeds the mentioned threshold, repeating the executions of the respective program until achieving a standard deviation that is below that certain threshold.

At the fifth sub-step, recording in a lookup table named, for example, ENERGETIC COST_PER_RESOURCE the energy consumed for each resource group per second.

At the sixth sub-step, creating a program that does not consume any resources in the resource groups in a significant manner and executing it for X times and Y seconds per execution, i.e., creating a program that sleeps for the time mentioned above with small breaks, to prevent the computer from operate in an idle mode.

At the seventh sub-step, calculating an average energy consumption level for each X executions of the program and the standard deviation as long as the standard deviation does not exceed a certain threshold (e.g., of ±25%) of the average energy consumption level. In case the standard deviation exceeds the threshold, repeating the execution of the program until achieving a standard deviation that is below the threshold.

At the eighth sub-step, recording the average energetic consumption of the computer system, resulted in the previous step as the ENERGETIC_COST _IDLE_PROGRAM.

At the second step, a profile for a computer program to be analyzed is created, in terms of what atomic actions of the computer system are required for the execution of the program on that specific computer system.

The profile for a computer program to be analyzed is created, according to the following sub-steps:
At the first sub-step, following the creation of ENERGETIC COST_PER_RESOURCE lookup table and the ENERGETIC_COST_IDLE_PROGRAM value, executing the target program (the energetic consumption of which needs to be measured) for X times, where each time the program operates for Y seconds.

At the second sub-step, during the execution of the target program, recording the computer resource consumption across all its main categories: CPU, MEM, File, etc.

At the third sub-step, calculating an average resource consumption level for each X executions of the target program and the respective resource categories recorded. Then, calculating the standard deviation of the results, as long as the standard deviation does not exceed a certain threshold (e.g., of +-25%) of the average consumption level. In case the standard deviation exceeds the threshold, repeating the execution of the target program until achieving a lower standard deviation that is below the threshold.

At the third step, the energy consumption of the computer program is calculated by calculating the amount of atomic actions related to the program during execution, multiplied by the energy consumption associated with every respective atomic action.

This is done according to the following sub-steps:
At the first sub-step, calculating the energetic cost of the program by multiplying each average resource consumption result with the energetic consumption of the respective resource category as calculated in ENERGETIC COST_PER_RESOURCE, and adding all the results into the total energetic cost of the program.

At the second sub-step, subtracting the result from the previous step by the ENERGETIC COST_IDLE_PROGRAM in order to achieve the relative energy consumption result of the target program vs. an idle program and idle computer.

Fig. 1A is a flowchart of a process for calculating the energy cost per resource of a computerized system that runs the software and the energy cost of an idle program, according to an embodiment of the invention. At the first step, three programs are built to profile the energy consumption of three different programs: A first program (CPU intensive program) that measures the consumption of the CPU; A second program (MEM intensive program) that measures the consumption of accessing the memory; A third program (File intensive program) that measures the consumption of accessing a stored file. Then, each built program is executed X times for a period of Y seconds and the energy consumption of the computerized device is recorded. Then, the energy consumption of each resource group (CPU, MEM, File) is calculated and recorded in a look-up table. Then the energetic cost of each resource is calculated based on its energetic measure. Then, an idle program that does not consume substantial resources is built and executed X times with Y seconds per execution. Then, the average energy consumption is calculated and recorded as the energy cost of the idle program, which reflects the overhead of the operating system.

Fig. 1B is a flowchart of a process for calculating the energy cost of target application (software) that runs on a computerized system, according to an embodiment of the invention. At the first step, the target software is executed X times with Y seconds per execution. Then, the average energy consumption is calculated and recorded for each resource category. Then, the result for each resource category in the previous execution is multiplied by a corresponding value in the energetic cost of each resource records. Then, the multiplication products are summed to provide the total energetic consumption of the target program. Finally, the energy cost of the idle program is subtracted from the total sum, to reflect the net energetic consumption of the target program, excluding the overhead of the operating system.

The same process can be repeated for every computer system, including desktop computers, laptops, mobile phones, servers, tablets, Internet of Things (the network of physical objects that are embedded with sensors, software, and other technologies for the purpose of connecting and exchanging data with other devices and systems over the internet), embedded systems (microprocessor-based computer hardware systems with software that is designed to perform a dedicated function), etc., that may run the program.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. A method for computing an estimated energy consumption of a target program running on a specific computerized system, comprising:
a) measuring the energy consumption of every atomic action of said specific computerized system in different resolutions;
b) creating a an energy cost for mapping between all atomic actions and their corresponding energy requirements for a specific computer system, on which the program will run;
c) creating a profile for said target program, in terms of which atomic actions of said specific computerized system are required for the execution of said target program on said specific computerized system; and
d) calculating the energy consumption of said target program, by calculating the amount of atomic actions related to said target program during its execution, multiplied by the energy consumption associated with every respective atomic action.

2. A method according to claim 1, wherein the energy consumption of every atomic action of the computerized system is measured by:
a) for each resource category, writing a program that consumes the maximum available resource for a target program in a continuous manner for a predetermined period of X seconds;
b) running the resource consumption programs which are available for each resource category for X times and Y seconds, such that the amount of seconds should be at least 100% longer than the time it takes a program to start up and shut down;
c) during each program execution, recording the amount of energy consumed by the computer system via an external power-meter, or via internal energy metrics;
d) calculating an average energy consumption level for each X executions of each program in each consumption category and a corresponding standard deviation, as long as the standard deviation does not exceed a predetermined threshold of the average consumption level;
e) whenever said standard deviation exceeds said threshold, repeating the executions of said target program until said standard deviation that is below said predetermined threshold;
f) recording the energy consumed for each resource group per second;
g) creating an idle program that does not substantially consume any resources in the resource groups
h) executing said idle program for X times and Y seconds per execution;
i) calculating an average energy consumption level for each X executions of said target program and the standard deviation, as long as said standard deviation does not exceed a certain threshold of the average energy consumption level, and whenever said standard deviation exceeds said threshold, repeating the execution of the program until achieving a standard deviation that is below said threshold; and
j) recording the average energetic consumption of the computer system, resulted in the preceding step as the energetic cost of said idle program.

3. A method according to claim 1, wherein the program is executed in a loop for the period of X seconds.

4. A method according to claim 1, wherein a profile for a target computer program to be analyzed is created by:
a) following the creation of a record of the energetic cost per resource the energetic cost of the idle program, executing the target program for X times, where each time said idle program operates for Y seconds;
b) during the execution of said target program, recording the computer resource consumption across all its main categories;
c) calculating an average resource consumption level for each X executions of said target program and the respective resource categories recorded; and
d) calculating the standard deviation of the results, as long as said standard deviation does not exceed a certain threshold of the average energy consumption level, and whenever said standard deviation exceeds said threshold, repeating the execution of the target program until achieving a standard deviation that is below said threshold.

5. A method according to claim 1, wherein the energy consumption of the computer program is calculated by:
a) calculating the energetic cost of the program by multiplying each average resource consumption result with the energetic consumption of the respective resource category;
b) adding all the results into a sum representing the total energetic cost of the target program; and
c) subtracting the result from the preceding step, the energetic cost of said idle program, to thereby obtain the relative energy consumption result of said target program.

6. A method according to claim 1, wherein the specific computerized system is selected from the group of:
- Desktops;
- Laptops;
- mobile phones;
- servers;
- tablets;
- loTs;
- embedded systems.

7. A system for computing an estimated energy consumption of a target program running on a specific computerized system, comprising:
a) at least one processor and associated memory, storing an application being run by said at least one processor, said at least one processor and said application being adapted to:
b) measure the energy consumption of every atomic action of said specific computerized system in different resolutions;
c) create an energy cost for mapping between all atomic actions and their corresponding energy requirements for a specific computer system, on which the program will run;
d) create a profile for said target program, in terms of which atomic actions of said specific computerized system are required for the execution of said target program on said specific computerized system; and
e) calculate the energy consumption of said target program, by calculating the amount of atomic actions related to said target program during its execution, multiplied by the energy consumption associated with every respective atomic action.
